# EUROPEAN PATENT APPLICATION

(11) **EP 4 838 410 A1**
(43) Date of publication of application: **11.11.2026**
(21) Application number: 25305664.2
(22) Date of filing: 09.05.2025
(51) Int. Cl.: G06N 3/045, G06N 3/09, G06N 5/01, G06N 20/20

(54) **METHOD OF DECISION-SUPPORT FOR A VEHICLE CONTROL OR RELATED VEHICLE-CONTROL SIMULATION AND ASSOCIATED SYSTEM**

(71) Applicant: THALES, 92190 Meudon (FR)
(72) Inventor: LAFOND, Daniel, Québec, G1P 4P5 (CA); Thivierge, Jean-Sébastien, Québec, G1P 4P5 (CA); BENESCH, Danielle, Québec, G1P 4P5 (CA); RICHARD, Jonathan, Québec, G1P 4P5 (CA)
(74) Representative: Lavoix

(57) **Abstract**

The invention concerns a method of decision-support for a vehicle-control or vehicle-control related simulation, the method comprises the following phases: an acquisition phase in which a user device (10) acquires contextual data relative to a neurophysiological state of a user, reception phase in which the user device (10) receives a decision-support machine-learning model and a correction machine-learning model from a server (20), a first application phase in which the user device (10) applies the decision-support machine-learning model on the contextual data to obtain decision-support data, a second application phase in which the user device (10) applies the correction machine-learning model on the decision-support data and contextual data to obtain corrected decision-support data, and a supply phase in which the user device (10) provides the corrected decision-support data to the user.

## Description

The present invention concerns a method of decision-support for a vehicle or related vehicle simulation. The present invention also concerns an associated system of decision-support for a vehicle or related vehicle simulation.

The invention is in the general field of machine learning models and concerns more specifically methods and systems for providing recommendations independently of variations between input data and training data of said machine learning models.

Nowadays, artificial intelligence is widely used to support decision-making, particularly in avionics. Policy capturing refers to example-based learning for automatic reproduction of the decision patterns applied by experts, in particular human experts. For example, policy capturing is achieved by applying supervised machine learning or statistical learning algorithms trained on labels which were provided by humans (or other sources such as groups of experts, organizations, other computerized systems) whose decision/behavior patterns need to be predicted or replicated. Once a policy capturing model is trained based on past observed decisions (related to a set of attributes of the decision context or target) such models can be used online for human decision support. Those online models may facilitate decision making and prevent errors and serve for training purposes (artificial expert feedback) or for decision automation (as a control loop for software tools and devices). Policy capturing may be applied in various technical fields.

For example, it is interesting to apply such models to the field of avionics in order to increase flight safety, particularly in critical phases, such as takeoff, disturbance or landing.

Furthermore, such models make it possible to reduce human error and improve aircraft automation.

However, this model can only be used when its input data are sufficiently close to the training data.

Typically, such models are re-trained according to the context in which they are used.

However, this solution requires considerable time and resources to collect the data needed to retrain the models.

For example, some models are trained to determine a pilot's neurophysiological state based on signals from sensors connected to that pilot.

But for such models, obtaining a sufficiently large dataset is laborious, since the constituent data are collected from the neurophysiological signals of volunteers.

There is therefore a need for a model adapted to provide accurate results for a population and/or a context whose characteristics differ from those of the model's dataset, while remaining economical in terms of training resources.

One aim of the invention is to propose a method of decision-support with improved accuracy and reliability, while taking into account the variations of context around the pilot.

To this aim, the subject matter of the invention is a method of decision-support for a vehicle-control or vehicle-control related simulation, the method being executed by a decision-support system comprising a user device, a server and a database, the method comprising the following phases:
a. an acquisition phase in which the user device acquires contextual data relative to a neurophysiological state of a user,
b. a reception phase in which the user device receives a decision-support machine-learning model and a correction machine-learning model from the server, the decision-support machine-learning model having been previously trained to provide decision-support data as a function of contextual data and the correction machine-learning model having been previously trained to provide corrected decision-support data as a function of decision-support data and contextual data,
c. a first application phase in which the user device applies the decision-support machine-learning model on the contextual data to obtain decision-support data,
d. a second application phase in which the user device applies the correction machine-learning model on the decision-support data and contextual data to obtain corrected decision-support data, and
e. a supply phase in which the user device provides the corrected decision-support data to the user.

The method according to the invention may comprise one or more of the features of the following feature, taken solely, or according to any technical feasible combination:
- a comparison phase in which the user device calculates a similarity coefficient between the contextual data and training contextual data on which the decision-support machine-learning model has been trained;
- the user device applies a Euclidian distance or a Manhattan distance to calculate the similarity coefficient;
- the similarity coefficient is below a predefined similarity threshold, the comparison phase is followed by a calibration phase during which the correction machine-learning model is re-trained;
- the calibration phase comprises the following steps :
   i. a feedback step during which the user device gets label(s) on the corrected decision-support data from the user,
   ii. a registration step of the corrected decision-support data and the associated label in the database,
   iii. a re-training step during which the correction machine-learning model is re-trained on the basis of the corrected decision-support data and the associated label(s) of the database, and
   iv. reiteration of all the previous steps of the calibration phase until a stop criterion is met;
- the stop criterion is a predefined number of calibration phases performed, advantageously less than 1000, preferably less than 100;
- the correction machine-learning model is configured to apply a plurality of machine-learning models on the decision-support data and contextual data to obtain a plurality of machine-learning results, calculate an accuracy coefficient associated with each of said results and provide the result associated with the highest accuracy coefficient as the corrected decision-support data;
- a confirmation phase during which the user device calculates a confirmation similarity coefficient between the corrected decision-support data provided during the supply phase and the decision-support data, then alerts the user if the confirmation similarity coefficient is less than a predefined confirmation threshold;
- a transmission phase, during which the user device sends the re-trained correction machine-learning model to the server, said re-trained correction machine-learning model being then stored in the database.

The invention further concerns a computer program containing software instructions which, when executed by a computer, implement a method of decision-support as presented above.

The invention further concerns a system decision-support for a vehicle-control or vehicle-control related simulation comprising a user device, a server and a database, the user device being configured to :
a. acquire contextual data relative to a neurophysiological state of a user,
b. receive a decision-support machine-learning model and a correction machine-learning model from the server, the decision-support machine-learning model having been previously trained to provide decision-support data as a function of contextual data and the correction machine-learning model having been previously trained to provide corrected decision-support data as a function of decision-support data and contextual data,
c. apply the decision-support machine-learning model on the contextual data to obtain decision-support data,
d. apply the correction machine-learning model on the decision-support data and contextual data to obtain corrected decision-support data, and
e. provide the corrected decision-support data to the user.

The system according to the invention may comprises sensors configured to provide contextual data.

The invention will be better understood, upon reading of the following description, given only as an example, and made in reference to the following figures, in which:
- Figure 1 is a schematic representation of a decision-support system including a user device, a server, a database, sensors and a communication network,
- Figure 2 is a flowchart illustrating an example of the implementation of a decision-support method according a first embodiment, and
- Figure 3 is a flowchart illustrating an example of the implementation of a decision-support method according to a second embodiment.

The invention will be described hereafter in its application in the field of vehicles, and more specifically in its application to aircraft. The invention may be applied, according to an example, for decision-support in piloting pilot driven aircraft or unmanned aerial vehicles. The invention can also be applied to related vehicle simulation.

A vehicle simulator is an electronic system that replicates the driving conditions of a vehicle through a digital simulator. Such a simulator makes it possible to train pilots to drive such vehicles without any human or material risk. The invention then makes it possible, in this context, to improve the said training.

However, as may be understood by the skilled person, the invention as described hereafter applies more generally for reliability analysis of policy capturing models implemented by Al assistance components in any other fields.

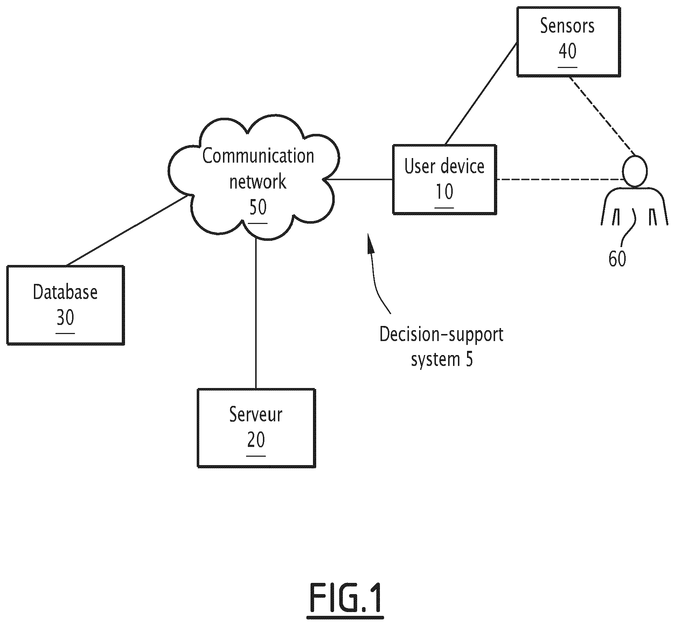

### Figure 1: System

Referring to Figure 1, there is shown a schematic diagram of a decision-support system 5, the decision-support system 5 being suitable for implementing one or more non-limiting embodiments of the present technology.

It is to be expressly understood that the decision-support system 5 as shown is merely an illustrative implementation of the present technology.

In this example, the decision-support system 5 comprises a user device 10, a server 20, a database 30 and a plurality of sensors 40 communicatively coupled over a communication network 50.

### Figure 1: User device and user

The user device 10 is associated with a user 60. In one or more embodiments, the user 60 may be a human expert in a given field and may analyze and/or interact with information displayed on a display interface of the user device 10 to perform labelling of training data, make decisions and/or predictions. It will be appreciated that the user 60 may also be a group of human experts.

For example in the field of avionics, the user 60 may be a pilot or an operator piloting an unmanned vehicle from a ground center.

The user device 10 is configured to estimate the corrected decision-support data for the user 60.

The user device 10 comprises an information processing unit, formed for example by a processor, and an electronic memory associated with the processor.

The user device 10 comprises an acquisition module, a reception module, a first application module, a second application module and a supply module.

The acquisition module is configured to acquire contextual data.

The reception module is configured to receive machine-learning models.

The first application module is configured to apply a machine-learning model to the contextual data to obtained decision-support data.

The second application module is configured to apply a machine-learning model on the decision-support data and contextual data to obtain corrected decision-support data

The supply module is configured to supply the corrected decision-support data to the user.

In one embodiment, the acquisition module, the reception module, the first application module, the second application module and the supply module are implemented in the form of software, or a software brick, executable by the processor.

Memory is then able to store acquisition, reception, first application, second application and supply software.

In a variant not shown, the acquisition module, the reception module, the first application module, the second application module and the supply module are implemented as a programmable logic component, such as an FPGA (Field Programmable Gate Array), or as an integrated circuit, such as an ASIC (Application Specific Integrated Circuit).

It will be appreciated that the user device 10 may for example implemented as a desktop computer, a computer onboard a vehicle, a tablet, a smart phone and the like.

In the following description, the user device 10 is an on-board computer for an aircraft fitted with a plurality of sensors 40 and the user 60 is the pilot of said aircraft. Typically, the server 20 and the database 30 are outside the aircraft.

According to a variant, the aircraft is an unmanned aerial vehicle, fitted with a plurality of sensors 40, whereas the user device 10 is distant from the aircraft, and is configured to communicate with an onboard computer via a wireless communication protocol.

The user device 10 is configured to provide unlabeled and labeled objects to the server 20. Labeled object is numerical object that has been assigned one or more labels to add context or meaning. In machine learning and artificial intelligence, these labels often serve as a target for the model to predict.

In this description, a labeled object is a numerical recommendation and the associated label corresponds to validation (or not) of the recommendation by the user 60.

### Figure 1: Server

The server 20 is configured to:
- obtain labeled and unlabeled objects from the database 30 and/or the user device 10 ;
- access to a set of machine learning (ML) algorithms ;
- train at least one of the ML algorithms to obtain a set of machine learning (ML) models;
- perform online machine learning with the set of ML models to obtain a plurality of machine learning (ML) results ;
- evaluate results of the ML models according at least one metric; and
- generate and transfer at least one of the ML results to the user device 10 and/or to the database 30.

The set of ML algorithms comprise one or more supervised ML algorithm(s).

In the context of the present specification, a ML algorithm is a procedure that is executed on training data to obtain a ML model.

In one or more embodiments, the set of ML algorithms comprises, among others, a set of classification ML algorithms.

Additionally or alternatively, the set of ML algorithms may comprise a set of regression ML algorithms.

It will be appreciated that depending on the type of prediction task to be performed, i.e. classification or regression, the set of ML algorithms may comprise only the set of classification ML algorithms, only the set of regression ML algorithms or a combination thereof.

The set of classification ML algorithms comprises one or more classification ML algorithms, also known as classifiers which output models that attempt to estimate the mapping function (f) from the input variables (x) to one or more discrete or categorical output variables (y). The set of classification ML algorithms may include linear and/or non-linear classification ML algorithms.

Non-limiting examples of classification ML algorithms include: Perceptrons, Naive Bayes, Decision Tree, Logistic Regression, K-Nearest Neighbors, Artificial Neural Networks (ANN)/Deep Learning (DL), Support Vector Machines (SVM), and ensemble methods such as Random Forest, Bagging, AdaBoost, and the like.

The set of regression ML algorithms comprises one or more regression ML algorithms which output models that attempt to estimate the mapping function from the input variables to numerical or continuous output variables.

Non-limiting examples of regression ML algorithms include: Artificial Neural Networks (ANN)/Deep Learning (DL), Support Vector Machines (SVM), Linear Regression, Ordinary Least Squares Regression (OLSR), Stepwise Regression, Multivariate Adaptive Regression, Splines (MARS), and Locally Estimated Scatterplot Smoothing (LOESS).

The set of ML algorithms is configured to output a set of ML models after undergoing initialization, which may comprise a knowledge capture phase, also known as a training or a learning phase, during which the set of ML algorithms receive labelled data and output one or more ML models. In one or more other embodiments, the set of ML algorithms outputs the set of ML models after being initialized without performing the knowledge capture phase.

After undergoing initialization, the first ML algorithm outputs a first ML model, the second ML algorithms output a second ML model, and the third ML algorithm outputs a third ML model etc.

For example, ML algorithms are classification or regression models.

It will be appreciated that the server 20 can be implemented as a conventional computer server. More generally, the server 20 may be implemented in any suitable hardware and/or software and/or firmware or a combination thereof. In the disclosed non-limiting embodiment of present technology, the server 20 is a single server. In one or more alternative non-limiting embodiments of the present technology, the functionality of the server 20 may be distributed and may be implemented via multiple servers. The implementation of the server 20 is well known to the person skilled in the art.

However, the server comprises a communication interface configured to communicate with various entities (such as the database 30, for example and other devices potentially coupled to the communication network 50) via the communication network 50.

In this description, a ML model refers to a policy-capturing model.

### Figure 1: Database

A database 30 is communicatively coupled to the server 20 and optionally the user device 10 via the communications network 50. But, in one or more alternative implementations, the database 30 may be communicatively coupled to the server 20 without departing from the teachings of the present technology.

The database 30 may receive data from the server 20 for storage thereof and may provide stored data to the server 20 for use thereof.

As a non-limiting example, the database 30 may comprise a PostgreSQL database.

In one or more embodiments of the present technology, the database 30 is configured to store a plurality of labelled objects and/or a plurality of unlabeled objects.

For example, the plurality of labelled objects are training data that can be used by the server 20 as an input of the set of ML algorithms to generate a retrain set of ML models.

Training data may be initial training data or labelled data from previous recommendations. The nature of the given object is not limited, and a given object may be any digital representation of information. In one or more embodiments, a given object may be raw or unprocessed data in the form of byte code, a digital file or a document.

In one or more other embodiments, a given object may include at least partially processed data.

Each given object is associated with or represented by a set of features. The set of features are explanatory variables quantifying properties of the given object and used by experts for making decisions and/or models for outputting a recommendation or prediction. The set of features may include one or more of: categorical features, ordinal features, integer valued features, and real-valued features.

For example, a training data of a previous recommendation contains the ID of the used ML model to provide it, the recommendation, parameter values and agreement indicator.

According to an embodiment, the agreement indicator is a binary state, indicating whether the expert user accepted or not the recommendation. For example, if the expert user is a pilot, the agreement indicator is equal to 1 if the pilot accepted the recommendation, 0 if not.

Advantageously, the agreement indicator is representative of the reliability of the recommendation as viewed by the user.

### Figure 1: Sensors

The plurality of sensors 40 is configured to sense a physical quantity that can influence the result of an ML model in the form of an analog signal. More specifically, each sensor 40 is configured to measure the physical quantity or to receive a time signal from an external agent and generate a representative signal therefrom. The representative signal is generally an analog signal.

Thus, each sensor 40 corresponds, for example, to an antenna, an electrode, a LIDAR, a radar or a position, pressure, brightness, altitude, speed or temperature sensor.

### Figure 1: Communication network

In one or more embodiments of the present technology, the communications network 50 is the internet. In one or more alternative non-limiting embodiments, the communication network 50 may be implemented as any suitable local area network (LAN), wide area network (WAN), a private communication network or the like.

It will be appreciated that implementations for the communication network 50 are for illustration purposes only.

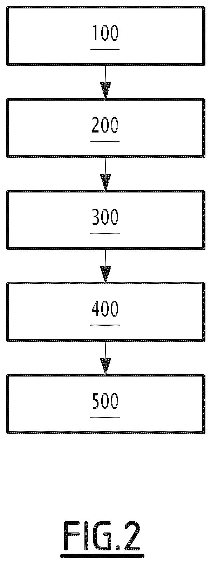

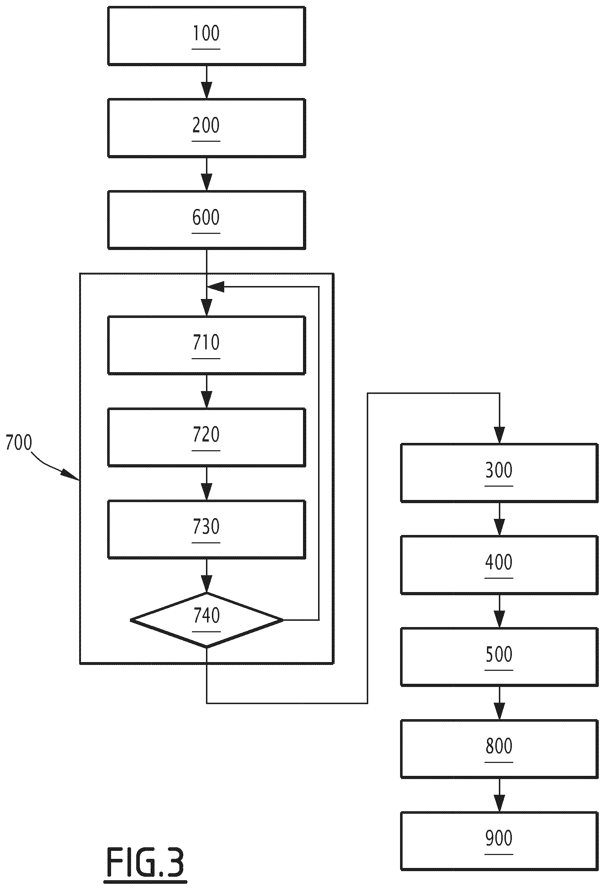

### Figure 2 and figure 3: method

The operation of the decision-support system is now described with reference to Figure 2, which illustrates an example of the implementation of a decision-support method.

In an acquisition phase 100, the user device 10 acquires contextual data.

The contextual data are relative to a neurophysiological state of the user 60.

In one embodiment, contextual data are provided by sensors 40.

Typically, sensors are wearable and off body sensors.

In this example, contextual data are representative of neurophysiological characteristics of an individual. The neurophysiological state refers to the nervous system of a human, in particular the electrical and chemical activities of neurons, synapses and neural circuits.

Typically, contextual data are representative of cardiac activity, respiratory activity, brain activity or electrodermal activity.

In a reception phase 200, the user device 10 receives a decision-support machine-learning model and a correction machine-learning model from the server 20.

The decision-support machine-learning model has been previously trained on training contextual data to provide decision-support data as a function of the contextual data.

The correction machine-learning model has been previously trained on the training contextual data and training decision-support data to provide corrected decision-support data as a function of decision-support data and contextual data.

For example, the decision-support machine-learning model is a decision tree model or a neural network.

A decision tree model works by splitting data into branches based on feature values, ultimately leading to a decision or prediction at the end.

Advantageously, decision trees models are easy to interpret and often used to predict human decisions, in this case those of a pilot.

A neural network model is inspired by the structure and function of the human brain.

Advantages of neural network models include enhanced performance, especially with large volumes of data.

For example, the decision-support machine-learning model uses the Open Neural Network Exchange (ONNX) format (and running with ONNX runtime) derived from prior human data collections and modeling efforts that allow detecting variations in specific human states.

In one embodiment, the correction machine-learning model is configured to apply a plurality of ML models on the decision-support data and contextual data to obtain a plurality of machine-learning results and calculate an accuracy coefficient associated with each of said results.

The plurality of ML models is pre-stored in the server 20.

In this embodiment, the correction machine-learning model provides the result associated with the highest accuracy coefficient as the corrected decision-support data.

Typically, the correction machine-learning model is a classification or regression model.

For example, the correction machine-learning model is a supervised machine-learning model.

As shown in figure 3, in one embodiment, the method further comprises a comparison phase 600 in which the user device 10 calculates a similarity coefficient between the contextual data and training contextual data.

For example, the user device 10 applies a Euclidian distance or a Manhattan distance to calculate the similarity coefficient.

The Euclidean distance is the distance between two points in an n-dimensional Euclidean space.

The Euclidean distance calculated by the user device 10 follows the equation: $d \left(X, Y\right) = \sqrt{{\sum }_{i = 1}^{n} {\left({X}_{i}-{Y}_{i}\right)}^{2}}$

Where:
- X : contextual data
- Y : training contextual data

The Manhattan distance is a measure of the distance between two points in a multidimensional space.

The Manhattan distance calculated by the user device 10 follows the equation: $d \left(X, Y\right) = \left|{X}_{i}-{Y}_{i}\right|$

Where:
- X : contextual data
- Y : training contextual data

The Manhattan distance is preferred when data are widely dispersed.

The training contextual data can be pre-treated. For example the training contextual data are normalized or filtered among a plurality of training contextual data.

For example, if the similarity coefficient is below a predefined similarity threshold, the comparison phase 600 is followed by a calibration phase 700 during which the correction machine-learning model is re-trained.

The re-training of the correction machine-learning model can be carried out directly on the server 20 (network) or on the user device 10 (local).

Typically, the calibration phase 700 comprises a feedback step 710, a registration step 720, a re-training step 730 and a reiteration step 740.

During the feedback step 710, the user device 10 gets label(s) on the corrected decision-support data from the user 60.

During the registration step 720, the user device 10 sends the corrected decision-support data and the associated label in the database 30 to register them.

During the re-training step 730, the correction machine-learning model is re-trained based on the corrected decision-support data and the associated label(s) of the database 30.

The database 30 having been enriched, the ML models generated by the use of the ML algorithms are better adapted to the calibration context.

During the reiteration step 740, all the previous steps of the calibration phase 700 until a stop criterion is met.

For example, the calibration phase 700 is implemented each time the user device 10 acquires contextual data.

In a variant, the calibration phase 700 is implemented each time a predetermined number of acquisitions is reached.

In one embodiment, the stop criterion is a predefined number of calibration phases performed.

Advantageously the predefined number is less than 1000, preferably less than 100.

In a first application phase 300, the user device 10 applies the decision-support machine-learning model on the contextual data to obtain decision-support data.

In a second application phase 400, the user device 10 applies the correction machine-learning model on the decision-support data and contextual data to obtain corrected decision-support data.

The skilled user will understand that the correction machine-learning model then allows fine-tuning of the decision-support machine learning model results according to the context.

In a supply phase 500, the user device 10 provides the corrected decision-support data to the user 60.

For example, the decision-support data is provided in the form of a notification on the display interface, e.g. the screen, of the user device 10, an audible alert or a clearance.

For example, the corrected decision-support data is pre-processed into a form that the user can understand 60. In one embodiment, the method further comprises a confirmation phase 800.

During the confirmation phase 800, the user device 10 calculates a confirmation similarity coefficient between the corrected decision-support data provided during the supply phase 500 and the decision-support data.

Typically, the user device 10 applied the Euclidian distance or the Manhattan distance to calculate the confirmation similarity coefficient.

For example, the user device 10 alerts the user if the confirmation similarity coefficient is less than a predefined confirmation threshold.

In one embodiment, the method further comprising a transmission phase 900.

During the transmission phase 900, the user device 10 sends the re-trained correction machine-learning model to the server 20.

The re-trained correction machine-learning model is then stored in the database 30.

The re-trained correction machine-learning model can also be directly embedded in the user device 10.

### Advantages

Advantageously, the proposed decision-support method completely removes the need to collect a new dataset to re-train the decision-support model for use in a new context.

In addition, the proposed decision-support method makes it possible to increase the accuracy of the results provided by the model by adapting said results to a specific context.

Furthermore, the proposed decision-support method makes it possible to avoid the need to manually curate the data and manually develop new models.

## Claims

1. Method of decision-support for a vehicle-control or vehicle-control related simulation, the method being executed by a decision-support system (5) comprising a user device (10), a server (20) and a database (30), the method being **characterized in that** it comprises the following phases :
a. an acquisition phase (100) in which the user device (10) acquires contextual data relative to a neurophysiological state of a user,
b. a reception phase (200) in which the user device (10) receives a decision-support machine-learning model and a correction machine-learning model from the server (20), the decision-support machine-learning model having been previously trained to provide decision-support data as a function of contextual data and the correction machine-learning model having been previously trained to provide corrected decision-support data as a function of decision-support data and contextual data,
c. a first application phase (300) in which the user device (10) applies the decision-support machine-learning model on the contextual data to obtain decision-support data,
d. a second application phase (400) in which the user device (10) applies the correction machine-learning model on the decision-support data and contextual data to obtain corrected decision-support data, and
e. a supply phase (500) in which the user device (10) provides the corrected decision-support data to the user.

2. A method according to claim 1, said method further comprises a comparison phase (600) in which the user device (10) calculates a similarity coefficient between the contextual data and training contextual data on which the decision-support machine-learning model has been trained.

3. A method according to claim 2, wherein the user device (10) applies a Euclidian distance or a Manhattan distance to calculate the similarity coefficient.

4. A method according to claim 2 or 3, wherein if the similarity coefficient is below a predefined similarity threshold, the comparison phase (600) is followed by a calibration phase (700) during which the correction machine-learning model is re-trained.

5. A method according to claim 4, wherein the calibration phase (700) comprises the following steps :
v. a feedback step (710) during which the user device (10) gets label(s) on the corrected decision-support data from the user,
vi. a registration step (720) of the corrected decision-support data and the associated label in the database (30),
vii. a re-training step (730) during which the correction machine-learning model is re-trained on the basis of the corrected decision-support data and the associated label(s) of the database (30), and
viii. reiteration (740) of all the previous steps of the calibration phase (700) until a stop criterion is met.

6. A method according to claim 5, wherein the stop criterion is a predefined number of calibration phases performed, advantageously less than 1000, preferably less than 100.

7. A method according to any of claim 1 to 6, wherein the correction machine-learning model is configured to apply a plurality of machine-learning models on the decision-support data and contextual data to obtain a plurality of machine-learning results, calculate an accuracy coefficient associated with each of said results and provide the result associated with the highest accuracy coefficient as the corrected decision-support data.

8. A method according to any of claim 1 to 7, said method further comprising a confirmation phase (800) during which the user device (10) calculates a confirmation similarity coefficient between the corrected decision-support data provided during the supply phase (400) and the decision-support data, then alerts the user if the confirmation similarity coefficient is less than a predefined confirmation threshold.

9. A method according to any of claim 1 to 8, said method further comprising a transmission phase (900), during which the user device (10) sends the re-trained correction machine-learning model to the server (20), said re-trained correction machine-learning model being then stored in the database (30).

10. Computer program containing software instructions which, when executed by a computer, implement a method of decision-support according to any one of claims 1 to 9.

11. System of decision-support for a vehicle-control or vehicle-control related simulation comprising a user device (10), a server (20) and a database (30), the user device (10) being configured to :
a. acquire contextual data relative to a neurophysiological state of a user,
b. receive a decision-support machine-learning model and a correction machine-learning model from the server (20), the decision-support machine-learning model having been previously trained to provide decision-support data as a function of contextual data and the correction machine-learning model having been previously trained to provide corrected decision-support data as a function of decision-support data and contextual data,
c. apply the decision-support machine-learning model on the contextual data to obtain decision-support data,
d. apply the correction machine-learning model on the decision-support data and contextual data to obtain corrected decision-support data, and
e. provide the corrected decision-support data to the user.

12. System according to claim 11, in which the system (5) also comprises sensors (40) configured to provide contextual data.

## Amended claims

### Amended claims in accordance with Rule 137(2) EPC.

1. Method of decision-support for a vehicle-control or vehicle-control related simulation, the method being executed by a decision-support system (5) comprising a user device (10), a server (20) and a database (30), the method being **characterized in that** it comprises the following phases :
a. an acquisition phase (100) in which the user device (10) acquires contextual data relative to a neurophysiological state of a user,
b. a reception phase (200) in which the user device (10) receives a decision-support machine-learning model and a correction machine-learning model from the server (20), the decision-support machine-learning model having been previously trained to provide decision-support data as a function of contextual data and the correction machine-learning model having been previously trained to provide corrected decision-support data as a function of decision-support data and contextual data,
c. a first application phase (300) in which the user device (10) applies the decision-support machine-learning model on the contextual data to obtain decision-support data,
d. a second application phase (400) in which the user device (10) applies the correction machine-learning model on the decision-support data and contextual data to obtain corrected decision-support data,
e. a supply phase (500) in which the user device (10) provides the corrected decision-support data to the user,
f. a comparison phase (600) in which the user device (10) calculates a similarity coefficient between the contextual data and training contextual data on which the decision-support machine-learning model has been trained,
g. if the similarity coefficient is below a predefined similarity threshold, a calibration phase (700) during which the correction machine-learning model is re-trained, the calibration phase (700) comprising a feedback step (710) in which the user device (10) gets label(s) on the corrected decision-support data from the user (60).

2. A method according to claim 1, wherein the user device (10) applies a Euclidian distance or a Manhattan distance to calculate the similarity coefficient.

3. A method according to claim 1 or 2, wherein the calibration phase (700) comprises the following steps:
i. a registration step (720) of the corrected decision-support data and the associated label in the database (30),
ii. a re-training step (730) during which the correction machine-learning model is re-trained on the basis of the corrected decision-support data and the associated label(s) of the database (30), and
iii. reiteration (740) of all the previous steps of the calibration phase (700) until a stop criterion is met.

4. A method according to claim 3, wherein the stop criterion is a predefined number of calibration phases performed, advantageously less than 1000, preferably less than 100.

5. A method according to any of claim 1 to 4, wherein the correction machine-learning model is configured to apply a plurality of machine-learning models on the decision-support data and contextual data to obtain a plurality of machine-learning results, calculate an accuracy coefficient associated with each of said results and provide the result associated with the highest accuracy coefficient as the corrected decision-support data.

6. A method according to any of claim 1 to 5, said method further comprising a confirmation phase (800) during which the user device (10) calculates a confirmation similarity coefficient between the corrected decision-support data provided during the supply phase (400) and the decision-support data, then alerts the user if the confirmation similarity coefficient is less than a predefined confirmation threshold.

7. A method according to any of claim 1 to 6, said method further comprising a transmission phase (900), during which the user device (10) sends the re-trained correction machine-learning model to the server (20), said re-trained correction machine-learning model being then stored in the database (30).

8. Computer program containing software instructions which, when executed by a computer, implement a method of decision-support according to any one of claims 1 to 7.

9. System of decision-support for a vehicle-control or vehicle-control related simulation comprising a user device (10), a server (20) and a database (30), the user device (10) being configured to:
a. acquire contextual data relative to a neurophysiological state of a user,
b. receive a decision-support machine-learning model and a correction machine-learning model from the server (20), the decision-support machine-learning model having been previously trained to provide decision-support data as a function of contextual data and the correction machine-learning model having been previously trained to provide corrected decision-support data as a function of decision-support data and contextual data,
c. apply the decision-support machine-learning model on the contextual data to obtain decision-support data,
d. apply the correction machine-learning model on the decision-support data and contextual data to obtain corrected decision-support data,
e. provide the corrected decision-support data to the user,
f. calculates a similarity coefficient between the contextual data and training contextual data on which the decision-support machine-learning model has been trained, and
g. if the similarity coefficient is below a predefined similarity threshold, re-train the correction machine-learning model by getting label(s) on the corrected decision-support data from the user (60).

10. System according to claim 9, in which the system (5) also comprises sensors (40) configured to provide contextual data.
